# FASCICULE DE BREVET EUROPEEN

(11) **EP 2 799 285 B1**
(45) Date de publication et mention de la délivrance du brevet: **24.07.2019**
(21) Numéro de dépôt: 14305307.2
(22) Date de dépôt: 04.03.2014
(51) Int. Cl.: B60P 7/08

(54) **Dispositif de mise sous tension d'une sangle**
Vorrichtung zum Spannen eines Gurts
Device for tensioning a strap

(30) Priorité: 02.05.2013 FR 1354069
(43) Date de publication de la demande: 05.11.2014
(73) Titulaire: Abandarat, Driss, 68200 Mulhouse (FR)
(72) Inventeur: Abandarat, Driss, 68200 Mulhouse (FR)
(74) Mandataire: Hege, Frédéric

(56) Documents cités:
- WO-A1-2012/162860
- DE-A1-102011 056 879
- DE-U1-202010 011 107
- FR-A1- 2 443 616

## Description

### Domaine technique :

La présente invention concerne un dispositif de mise sous tension d'une sangle pour fixer une charge, comportant un levier lié en rotation à une embase autour d'un axe de pivotement et un axe d'enroulement fendu pour permettre l'enroulement de la dite sangle, ledit axe d'enroulement étant solidaire d'au moins une première roue à rochet coopérant avec au moins un premier cliquet formant des premiers moyens de contrôle de la rotation dudit axe d'enroulement, ledit au moins premier cliquet étant monté mobile en translation dans ladite embase entre une position active dans laquelle il est couplé à ladite première roue à rochet et est sollicité par un organe de rappel vers l'axe d'enroulement pour contraindre la rotation de l'axe d'enroulement dans un seul sens, enrouler et tendre ladite sangle, et une position passive dans laquelle il est découplé de ladite première roue à rochet pour libérer en rotation l'axe d'enroulement, détendre et dérouler ladite sangle.

### Technique antérieure :

L'invention concerne le domaine technique du transport de marchandises, et plus spécifiquement la mise sous tension de sangle permettant le maintien d'une charge de marchandises au moyen d'un dispositif de mise sous tension d'une sangle, encore appelé dispositif tendeur à cliquet.

L'on connaît déjà par la publication FR 2 443 616 A1 un dispositif tendeur utilisé usuellement. Un tel dispositif, selon l'art antérieur, se compose d'une embase comprenant à une de ses extrémités, un axe fendu dans lequel est introduite la sangle. Un levier est lié en rotation à l'embase via l'axe fendu. Deux roues à rochet, placées, à chaque extrémité de l'axe fendu et solidaires avec lui, coopèrent avec deux cliquets ménagés au niveau du levier. Une poignée de déverrouillage est également ménagée sur le levier. Elle coopère avec ces deux cliquets et peut coulisser le long d'une glissière. Deux autres cliquets sont également prévus au niveau de l'embase et coopèrent avec les deux roues à rochet. Le système à cliquet permet d'une part d'empêcher la rotation de l'axe fendu dans un sens déterminé et d'autre part d'autoriser la rotation de l'axe fendu dans le sens inverse par l'intermédiaire d'un mouvement de pivotement alternatif du levier. L'opérateur tient d'une main l'embase en position basse et de l'autre main le levier qu'il fait pivoter de la position basse, lorsqu'il forme un angle fermé avec l'embase, vers une position haute, lorsqu'il forme un angle ouvert avec l'embase. De ce fait, lorsque qu'un mouvement de pivotement est exercé sur le levier, la sangle s'enroule autour de l'axe fendu et est mise sous tension. Ce mouvement de pivotement est exercé dans le sens des aiguilles d'une montre. A l'inverse, lorsque l'on souhaite relâcher la tension de la sangle, il est nécessaire de lever au maximum le levier et de faire coulisser la poignée du levier afin de désengager les cliquets pour permettre la libre rotation de l'axe fendu. Ce dispositif présente néanmoins des inconvénients, car le mouvement de pivotement du levier dans le sens des aiguilles d'une montre n'est pas naturel pour l'opérateur, qui doit exercer une force du bas vers le haut. La force exercée par l'opérateur sur le levier est souvent insuffisante pour tendre la sangle de manière optimale. L'opérateur est alors contraint d'utiliser un outil annexe pour faire bras de levier, ce qui peut présenter un risque pour sa sécurité. L'opération de déverrouillage présente également des inconvénients. En effet l'opérateur est contraint de maintenir le levier en position haute par rapport à l'embase et de tirer simultanément sur la poignée de déverrouillage. De plus, la libération de la sangle est très brutale et provoque souvent des blessures lorsque celle-ci n'est pas anticipée.

Selon l'art antérieur, on connaît également un dispositif tendeur dont le sens de rotation de l'axe d'enroulement a été inversé, par l'inversion du sens d'orientation des dents des roues à rochet, comme décrit dans la publication DE 20 2010 011 107 U1. Un tel dispositif permet d'obtenir un mouvement plus naturel pour l'opérateur qui doit alors exercer une force sur le levier du haut vers le bas. Néanmoins, la force nécessaire pour tendre une sangle correctement à savoir jusqu'à une valeur d'environ 750 daN n'est pas à la portée de tous les chauffeurs routiers ou autres opérateurs. C'est pourquoi, ce dispositif est parfois pourvu d'un levier plus long permettant d'exercer un bras de levier plus important qu'avec le dispositif standard décrit précédemment. Un tel dispositif dont le sens de rotation de l'axe a été inversé présente l'inconvénient de nécessiter l'ajout d'une barre à l'avant de l'embase pour plaquer la sangle contre la charge et non contre le dispositif. En outre, lorsque le dispositif est pourvu d'un levier plus long, celui-ci présente l'inconvénient de présenter un poids supérieur au dispositif tendeur standard et de fait un encombrement plus important posant des problèmes de rangement dans le camion.

La publication DE 10 2011 056 879 A1 propose un dispositif tendeur dans lequel l'axe de pivotement du levier et l'axe d'enroulement de la sangle sont distincts, parallèles, et couplés en rotation par un engrenage. Toutefois, cet engrenage comporte un axe intermédiaire entre les axes de pivotement et d'enroulement ayant pour effet d'entraîner lesdits axes dans le même sens de rotation et à la même vitesse, sans aucun effet de démultiplication de l'effort à fournir sur le levier.

La publication EP 2 695 771 A1 propose encore un autre dispositif tendeur dans lequel les axes de pivotement du levier et d'enroulement de la sangle sont distincts, parallèles et liés en rotation par deux pignons de diamètres différents permettant de démultiplier l'effort à exercer sur le levier. Toutefois, la roue à rochet, permettant à la fois d'imposer un seul sens de rotation pour enrouler et tendre la sangle, de verrouiller la sangle en position enroulée et tendue, et de déverrouiller la sangle, n'est pas solidaire de l'axe d'enroulement, mais de l'axe de pivotement du levier, qui correspond au plus petit pignon de la transmission du mouvement de rotation. Ainsi, cette disposition est critique étant donné qu'en position verrouillée, la force exercée par la tension de la sangle est multipliée et supportée par le plus petit pignon, lequel est bloqué en rotation par un cliquet engrené dans sa roue à rochet. Ce dispositif tendeur est par conséquent limité à des tensions de serrage faibles, inférieures à 1,5T, est sujet au risque de casse en cas de dépassement, et ne répond pas aux normes en vigueur.

Pour toutes ces raisons, les solutions connues actuellement ne sont pas satisfaisantes.

### Exposé de l'invention :

La présente invention vise à pallier ces inconvénients en proposant un dispositif de mise sous tension permettant le serrage de la sangle en agissant avec une force moindre sur le levier, le verrouillage de la sangle serrée garanti et sécurisé, ainsi que le desserrage de la sangle en toute sécurité. De plus, le dispositif selon l'invention est facile d'usage grâce à l'ergonomie, la compacité et la légèreté du dispositif. Enfin, le dispositif selon l'invention est destiné à répondre à toute une gamme de tensions de serrage, sans risque de casse et dans le respect des normes en vigueur.

Dans ce but, l'invention concerne un dispositif de mise sous tension du genre indiqué en préambule, caractérisé en ce que ledit axe de pivotement et ledit axe d'enroulement sont distincts, parallèles et couplés en rotation par un mécanisme de transmission du mouvement agencé pour démultiplier la vitesse de rotation dudit axe d'enroulement par rapport à la vitesse dudit axe de pivotement et pour inverser leur sens de rotation, en ce que ledit dispositif comporte des seconds moyens de contrôle de la rotation dudit axe de pivotement, et en ce que ledit dispositif comporte en outre des moyens de déverrouillage agencés pour découpler lesdits premiers et seconds moyens de contrôle afin de libérer en rotation lesdits axes de pivotement et d'enroulement lorsque ledit levier est placé dans une position de déverrouillage pour autoriser le déroulement de ladite sangle.

De cette façon, l'invention permet de démultiplier la force exercée sur le levier par l'opérateur, au moyen d'un mécanisme de transmission du mouvement du type engrenage ou similaire, facilitant la manipulation dudit tendeur. De plus, elle permet de verrouiller et de déverrouiller la sangle de manière sûre, fiable et maitrisée pour une large gamme de tensions de serrage sans risque de casse.

Ledit mécanisme de transmission du mouvement comporte avantageusement au moins une première roue dentée menante solidaire dudit axe de pivotement et au moins une seconde roue dentée menée solidaire dudit axe d'enroulement.

Dans ce cas, ladite première roue menante comporte un nombre de dents inférieur au nombre de dents de ladite seconde roue menée pour définir un rapport de transmission inférieur à 1, qui peut être compris entre 1 et 0,25 et de préférence sensiblement égal à 0,5.

Dans un mode de réalisation préféré, le dispositif comporte au moins une butée ménagée sur ladite embase pour limiter le débattement angulaire dudit levier autour dudit axe de pivotement et définir au moins une des positions fermée ou ouverte dudit levier.

Selon un premier mode de réalisation de l'invention, lesdits seconds moyens de contrôle de la rotation dudit axe de pivotement comportent au moins une seconde roue à rochet qui coopère avec au moins un second cliquet mobile en translation dans ledit levier entre une position active dans laquelle il est couplé à ladite seconde roue à rochet et sollicité par un organe de rappel vers l'axe de pivotement pour contraindre la rotation de l'axe de pivotement dans un seul sens, et une position passive dans laquelle il est découplé de la dite seconde roue à rochet par une poignée de déverrouillage située sur ledit levier pour libérer en rotation ledit axe de pivotement.

Dans une forme de réalisation préférée de l'invention, lesdits moyens de déverrouillage peuvent comporter une première pièce liée audit premier cliquet et une seconde pièce liée audit second cliquet, lesdites première et seconde pièces comportant respectivement une première branche et une seconde branche saillantes agencées pour entrer en contact lorsque ladite poignée de déverrouillage est actionnée et plus particulièrement lorsque ladite poignée de déverrouillage est déplacée en translation sensiblement parallèle à ladite embase.

Dans une variante de réalisation, ladite première pièce comporte une partie femelle et ladite seconde pièce comporte une partie mâle agencée pour s'introduire dans ladite partie femelle lorsque la poignée de déverrouillage est déplacée en translation sensiblement perpendiculaire à ladite embase.

Selon un second mode de réalisation de l'invention, lesdits seconds moyens de contrôle de la rotation dudit axe de pivotement comportent au moins un organe de verrouillage mobile en translation dans ledit levier entre une position active, dans laquelle il est couplé à ladite au moins première roue dentée solidaire dudit axe de pivotement et sollicité par un organe de rappel vers l'axe de pivotement pour entraîner la rotation de l'axe de pivotement, et une position passive, dans laquelle il est découplé de ladite au moins première roue dentée par une poignée de déverrouillage située sur ledit levier pour libérer en rotation ledit axe de pivotement.

Dans ce cas, ledit organe de verrouillage est avantageusement aligné sur ladite roue dentée et disposé perpendiculairement à l'axe de rotation de ladite roue dentée.

Ledit dispositif peut comporter au moins une came mobile autour dudit axe de pivotement et sollicitée par un organe de rappel dans une position haute dans laquelle elle contraint le positionnement dudit organe de verrouillage en position active lorsque ladite poignée de déverrouillage est relâchée.

Dans une forme de réalisation préférée, lesdits moyens de verrouillage peuvent comporter un doigt de verrouillage monté pivotant dans ladite embase autour d'un axe entre une position verrouillée dans laquelle il bloque ledit cliquet en position active, et une position déverrouillée dans laquelle il déplace ledit cliquet en position passive, et une patte d'appui liée audit organe de verrouillage et agencée pour basculer ledit doigt de verrouillage en position déverrouillée, lorsque ladite poignée de déverrouillage est actionnée en position déverrouillée.

Le doigt de verrouillage peut comporter un talon logé dans un évidement du cliquet et un nez séparé angulairement dudit talon pour former un levier démultiplicateur de force et agencé pour recevoir ladite patte d'appui solidaire de la poignée de déverrouillage.

Le dispositif de mise sous tension comporte avantageusement des moyens de verrouillage du levier dans une position fermée, ces moyens de verrouillage comportant au moins un cran d'arrêt prévu sur ladite embase ou ladite poignée de déverrouillage, et agencé pour se verrouiller dans au moins une encoche prévue sur la poignée de déverrouillage ou ladite embase.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente une vue en perspective d'un premier mode de réalisation d'un dispositif de mise sous tension selon l'invention,
- la figure 2 est une vue de côté du dispositif de mise sous tension de la figure 1 montrant son mécanisme de transmission du mouvement,
- la figure 3 est une vue de côté du dispositif de mise sous tension de la figure 1 montrant un des cliquets en position active,
- la figure 4 est une vue de côté du dispositif de mise sous tension de la figure 1 montrant un des cliquets en position passive,
- la figure 5 est une vue de côté en coupe du dispositif de mise sous tension de la figure 1 montrant l'enroulement d'une sangle enroulée et ses moyens de déverrouillage,
- la figure 6 est une vue de côté d'une variante du dispositif de mise sous tension selon l'invention montrant ses moyens de déverrouillage,
- la figure 7 est une vue de côté du dispositif de mise sous tension de la figure 6 montrant les moyens de limitation du débattement angulaire du levier,
- la figure 8 représente une vue en perspective d'un second mode de réalisation d'un dispositif de mise sous tension selon l'invention,
- la figure 9 est une vue en coupe longitudinale du dispositif de mise sous tension de la figure 8 montrant son mécanisme de transmission du mouvement, et
- la figure 10 est une vue en coupe longitudinale du dispositif de mise sous tension de la figure 8 montrant ses moyens de déverrouillage.

### Illustration de l'invention et différentes manières de la réaliser :

En référence aux figures, le dispositif de mise sous tension 1, 100 selon l'invention permet de tendre une sangle 2 destinée à enserrer une charge, tel que par exemple des marchandises. Les pièces identiques ou similaires correspondant aux différentes variantes de réalisation illustrées portent les mêmes références pour simplifier la compréhension.

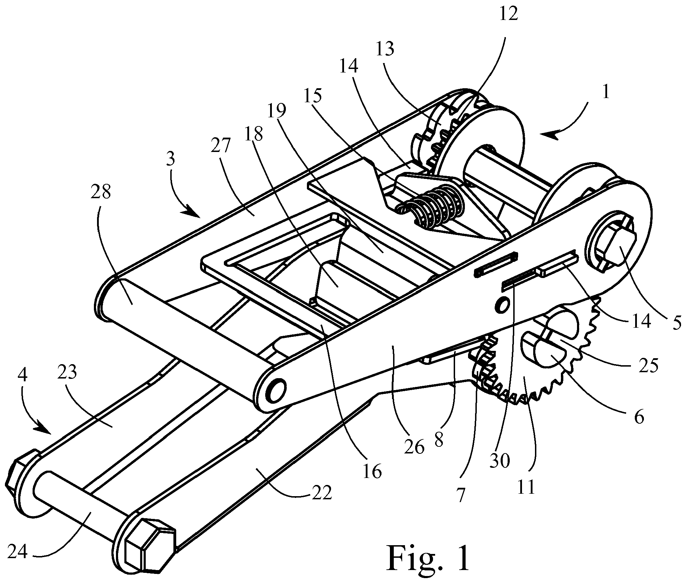

Le dispositif de mise sous tension 1 représenté à la figure 1 comprend une embase 4 ayant une forme de cadre, comportant deux pièces latérales 22, 23 parallèles entre elles et séparées à une première extrémité par une entretoise 24, et à une seconde extrémité par deux axes 5, 6 distincts et parallèles entre eux. Le premier axe est appelé axe d'enroulement 6 et comporte une fente 25 destinée à recevoir l'extrémité d'une sangle 2. Le second axe est appelé axe de pivotement 5. Il permet de lier à l'embase 4, un levier 3 en rotation. Le levier 3 est formé par deux pièces latérales 26, 27 parallèles entre elle et séparées à une première extrémité par une entretoise formant une poignée 28 et à la seconde extrémité par l'axe de pivotement 5.

A l'inverse de l'état de l'art, l'axe de pivotement 5 est distinct et parallèle de l'axe d'enroulement 6 et ceux-ci sont liés en rotation par un mécanisme de transmission du mouvement 10.

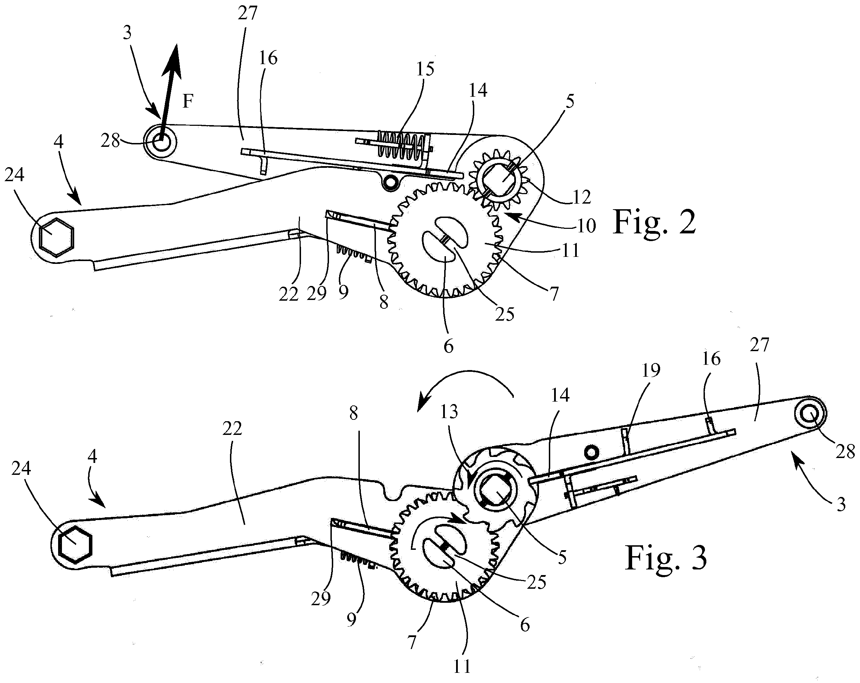

Ce mécanisme de transmission du mouvement 10 est agencé afin que l'axe de pivotement 5 lié au levier 3 entraîne la rotation de l'axe d'enroulement 6, tout en réduisant la force à exercer sur le levier 3 lors de la mise sous tension de la sangle 2. A cet effet, l'axe de pivotement 5 comporte à chacune de ses extrémités une roue dentée 12 engrenée avec une roue dentée 11 prévue à chacune des extrémités de l'axe d'enroulement 6. Cependant, le mécanisme de transmission du mouvement 10 n'est pas limité à un mécanisme à engrenages, il peut également consister en un mécanisme de transmission par chaînes ou courroies crantées. Comme représenté à la figure 2, les premières roues dentées 12 sont menantes car solidaires de l'axe de pivotement 5 du levier 3. Ces roues sont disposées à l'intérieur du levier 3. Et les secondes roues dentées 11 sont menées car solidaires de l'axe d'enroulement 6 et entraînées en rotation par les roues dentées 11. Ces roues sont disposées à l'extérieur de l'embase 4. Les premières roues menantes 12 comportent un nombre de dents inférieur au nombre de dents des secondes roues menées 11. Le rapport de transmission entre les première et seconde roues respectivement menantes 12 et menées 11 est compris entre 1 et 0,25 et de préférence sensiblement égal à 0,5. Le rapport de transmission est inférieur à 1 pour démultiplier le mouvement de rotation transmis. Ce rapport de transmission du mécanisme de transmission du mouvement 10 permet de réduire voire de diviser en deux la force F à exercer sur le levier 3 pour tendre et serrer la sangle 2. Cet avantage permet à l'opérateur de réaliser l'opération de serrage de la sangle 2 avec un effort moindre et en toute sécurité. De plus, cette configuration permet d'alléger le dispositif de mise sous tension 1 en réduisant la taille du levier 3. On aboutit alors à un dispositif de mise sous tension 1 compact, léger, sécurisé, ergonomique et facile à mettre en oeuvre.

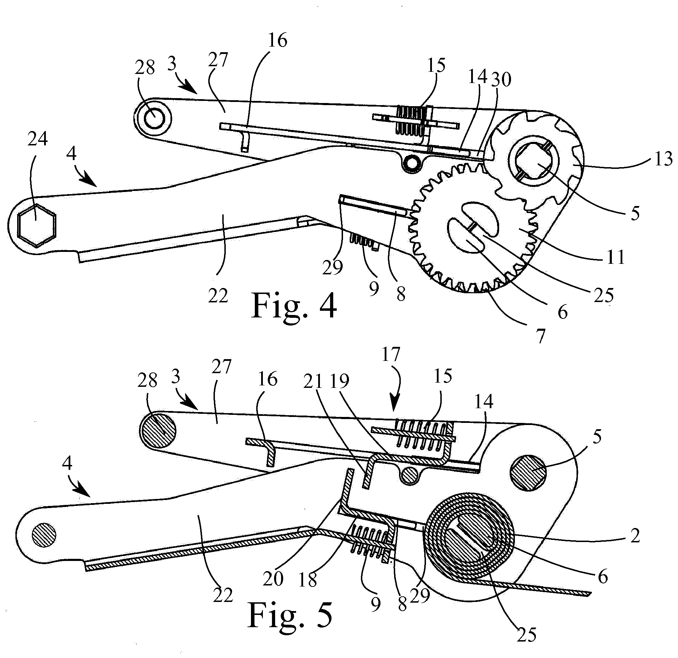

En référence à un premier mode de réalisation de l'invention illustré aux figures 1 à 7, et afin de contraindre le sens de rotation de l'axe d'enroulement 6 dans un seul sens permettant l'enroulement de la sangle 2, un mécanisme à cliquet est agencé sur chacun des axes 5, 6. De ce fait, comme le montrent les figures 1 et 3, l'axe d'enroulement 6 comporte à chacune de ses extrémités une première roue à rochet 7, apte à coopérer avec un premier cliquet 8, formant des premiers moyens de contrôle de la rotation dudit axe d'enroulement 6. Le premier cliquet 8 est monté mobile en translation sur l'embase 4 dans des fentes latérales 29 prévues dans les pièces latérales 22, 23. Il peut d'une part adopter une position active dans laquelle il est couplé à la première roue à rochet 7 et est sollicité par un organe de rappel 9, tel que par exemple un ressort, en direction de cette roue à rochet 7 pour contraindre la rotation de l'axe d'enroulement 6 dans un seul sens. Et d'autre part, il peut adopter une position passive dans laquelle, comme représenté à la figure 4, le premier cliquet 8 est découplé de la première roue à rochet 7, comprime l'organe de rappel 9 et libère la roue à rochet 7 donc la rotation de l'axe d'enroulement 6 pour autoriser la détente et le déroulement de la sangle 2.

Dans ce premier mode de réalisation de l'invention, l'axe de pivotement 5 comporte également à chacune de ses extrémités une seconde roue à rochet 13 apte à coopérer avec un second cliquet 14 formant des seconds moyens de contrôle de la rotation dudit axe de pivotement 5. Le second cliquet 14 est monté mobile en translation sur le levier 3 dans des fentes latérales 30 prévues dans les pièces latérales 26, 27 et est lié à une poignée de déverrouillage 16. Ce second cliquet 14 peut également adopter soit une position active, soit une position passive. En position active, il est couplé à la seconde roue à rochet 13 et est sollicité par un organe de rappel 15, tel que par exemple un ressort, en direction de cette roue à rochet 13 pour contraindre la rotation de l'axe de pivotement 5 dans un seul sens. En position passive, il est découplé de la seconde roue à rochet 13 grâce à la poignée de déverrouillage 16 ménagée sur le levier 3. Dans cette configuration, l'axe de pivotement 5 est de ce fait libéré du second cliquet 14 et peut tourner librement.

En outre, les roues à rochet 7, 13 sont agencées pour autoriser la rotation de l'axe d'enroulement 6, soit dans le sens des aiguilles d'une montre, soit dans le sens inverse des aiguilles d'une montre. Cette configuration permet de ne pas nécessiter l'ajout d'une barre à l'avant de l'embase 4, lorsque le dispositif de mise sous tension 1 est inversé, comme c'est le cas dans l'art antérieur. De préférence, et comme représenté aux figure 3 et 4, on orientera la roue à rochet 13 de l'axe de pivotement 5 dans le sens des aiguilles d'une montre et la roue à rochet 7 de l'axe d'enroulement 6 dans le sens inverse des aiguilles d'une montre, pour permettre un serrage de la sangle 2 par un mouvement de pivotement du levier 3 de haut en bas, ou plus exactement d'une position ouverte dans laquelle le levier 3 est écarté de l'embase 4 d'un angle défini (figure 3) à une position fermée dans laquelle il est rabattu sur l'embase 4 (figure 2), qui correspond à un mouvement naturel exercé par l'homme pour exercer une force en vue de serrer ou de tendre une sangle.

Pour déverrouiller l'axe d'enroulement 6, libérer sa rotation et détendre la sangle 2, le dispositif de mise sous tension 1 comporte également des moyens de déverrouillage 17 agencés pour que la position passive du second cliquet 14 de l'axe de pivotement 5 induise la position passive du premier cliquet 8 de l'axe d'enroulement 6. En outre, le déverrouillage de l'axe d'enroulement 6 s'effectue lorsque le levier 3 est en position fermée, rabattue sur l'embase 4 (figures 1, 2, 4, 5) de sorte à former un débattement angulaire sensiblement égal à 0 degré pour permettre aux moyens de déverrouillage 17 d'être alignés de façon temporaire. Les moyens de déverrouillage 17 consistent en une première pièce 18 liée au premier cliquet 8 et une seconde pièce 19 liée au second cliquet 14, représentées à la figure 5. Aussi, ces pièces 18 et 19 sont respectivement liées aux organes de rappel 9 et 15. Ces deux pièces 18, 19 comportent respectivement une première branche 20 et une seconde branche 21 sensiblement parallèles entre elles. La translation de la seconde pièce 19 à l'encontre de son organe de rappel 15 engendre la translation de la première pièce 18 à l'encontre de son organe de rappel 9, par le fait que la seconde branche 21 se déplace vers la première branche 20, entre en contact avec cette dernière et l'actionne. L'opération de déverrouillage est ainsi facilitée puisqu'il suffit à l'opérateur de rabattre le levier 3 en position fermée sur l'embase 4 et de tirer à fond sur la poignée de déverrouillage 16. Le déverrouillage est ainsi sécurisé par le fait que le desserrage de la sangle 2 est progressif en fonction de la traction qu'exerce l'opérateur sur la poignée de déverrouillage 16. De plus, cette configuration est très ergonomique pour l'opérateur qui d'une main peut actionner la poignée de déverrouillage 16 et maintenir l'embase 4, et de l'autre main tirer sur la sangle 2.

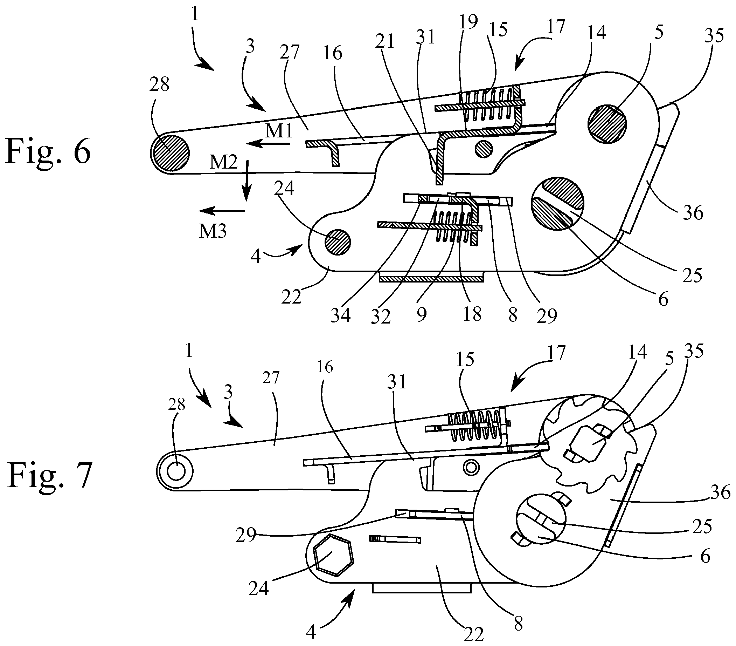

Dans la variante de réalisation selon l'invention illustrée aux figures 6 et 7, le dispositif de mise sous tension 1 comporte en outre un moyen de limitation du débattement angulaire dudit levier 3 autour dudit axe de pivotement 5. Par conséquent, en position fermée, le débattement angulaire du levier 3 est sensiblement égal à 0 degré, tandis qu'en position ouverte le débattement angulaire n'excède pas sensiblement 180 degrés. Dans ce but, l'embase 4 comporte une première butée 31 pour limiter le débattement angulaire du levier 3 en position fermée et une seconde butée 35 pour limiter le débattement angulaire du levier 3 en position ouverte. Plus précisément, l'arête supérieure des pièces latérales 22, 33 de l'embase 4 définit ladite première butée 31, et une pièce 36 est rapportée soit sur l'embase 4 soit sur au moins une extrémité de l'axe d'enroulement 6, cette pièce comportant ladite seconde butée 35.

En outre, dans ce mode de réalisation et en référence plus particulièrement à la figure 6, les moyens de déverrouillage 17, formés par une première pièce 18 solidaire du premier cliquet 8 et une seconde pièce 19 solidaire du second cliquet 14, comportent respectivement une partie femelle 32 et une partie mâle 21 constituée par la seconde branche de l'exemple précédent. En effet, la seconde pièce 19 du second cliquet 14 est agencée pour coopérer avec la première butée 31 de l'embase 4, lorsque la poignée de déverrouillage 16 est déplacée en translation sensiblement parallèle à l'embase 4 dans un premier mouvement volontaire de l'opérateur représenté par la flèche M1 (figure 6). Puis, la partie mâle 21 est introduite dans ladite partie femelle 32, lorsque le levier 3 portant la poignée de déverrouillage 16 est déplacé en translation sensiblement perpendiculaire à l'embase 4 dans un deuxième mouvement volontaire de l'opérateur représenté par la flèche M2 (figure 6). Enfin, la partie mâle 21 entre en contact avec un bord 34 de ladite partie femelle 32 pour emmener avec elle le cliquet 8, lorsque la poignée de déverrouillage 16 est déplacée en translation sensiblement parallèle à l'embase 4 dans un troisième mouvement volontaire de l'opérateur représenté par la flèche M3 (figure 6). Ce mécanisme permet de sécuriser la libération de la sangle 2 et d'éviter toute libération accidentelle de cette sangle, notamment lorsque le dispositif de mise sous tension 1 est en position route, dans laquelle la sangle est tendue et sécurise une charge pendant son transport.

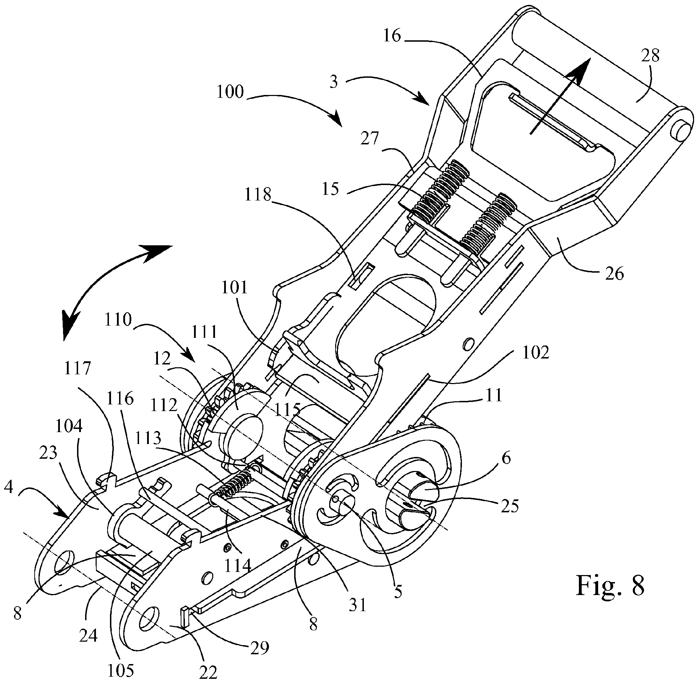

Les figures 8 à 10 illustrent un second mode de réalisation du dispositif de mise sous tension 100 selon l'invention. Il se différencie du premier mode de réalisation décrit précédemment par la suppression des secondes roues à rochet 13 sur l'axe de pivotement 5 et des seconds cliquets 14 d'une part, et par la modification des moyens de déverrouillage 16-21 d'autre part. La première modification permet d'avoir un réglage plus fin de la tension appliquée à la sangle étant donné que le pas des dents des roues dentées 12 est inférieur au pas de la roue à rochet 13. La seconde modification permet de réduire l'effort que l'opérateur doit appliquer sur la poignée de déverrouillage 16 pour déverrouiller l'axe d'enroulement 6.

Dans ce mode de réalisation, les seconds moyens de contrôle de la rotation de l'axe de pivotement 5 comportent un organe de verrouillage 101, en forme de fourchette, monté mobile en translation sur le levier 3 dans des fentes latérales 102 prévues dans les pièces latérales 26, 27 et lié à la poignée de déverrouillage 16. Cet organe de verrouillage 101 est aligné sur une des roues dentées 12 menantes solidaires de l'axe de pivotement 5, et disposé perpendiculairement à l'axe de rotation de ladite roue dentée 12. Il est mobile entre une position active dans laquelle il est couplé à la roue dentée 12 et une position passive dans laquelle il est découplé de la roue dentée 12. Bien entendu, le dispositif de mise sous tension 100 comporte deux organes de verrouillage 101 disposés symétriquement de l'axe central du dispositif pour coopérer avec les deux roues dentées 12 de l'axe de pivotement 5 et répartir ainsi les efforts de blocage. Pour tendre une sangle, l'opérateur saisit le levier 3 par la poignée 28 et tire simultanément sur la poignée de déverrouillage 16 pour déplacer les organes de verrouillage 101 de leur position active à une position passive autorisant le pivotement du levier 3 de sa position fermée à sa position ouverte (figure 8). Ces positions peuvent être délimitées par les butées 31, 35 prévues sur l'embase 4. Lorsque le levier 3 est en position ouverte, l'opérateur relâche la traction sur la poignée de déverrouillage 16 qui revient automatiquement en position basse sous l'action des organes de rappel 15, déplaçant ainsi les organes de verrouillage 101 en position active couplés avec les roues dentées 12. Lorsque l'opérateur pivote le levier 3 pour le ramener en position fermée sur l'embase 4, l'axe de pivotement 5 tourne entraîné par le levier 3 et entraîne dans le sens contraire l'axe d'enroulement 6 pour tendre la sangle. A titre d'exemple, on choisit un rapport des roues dentées 12, 11 tel que quatre pivotements de levier 3 génèrent un tour complet de l'axe d'enroulement 6 de la sangle.

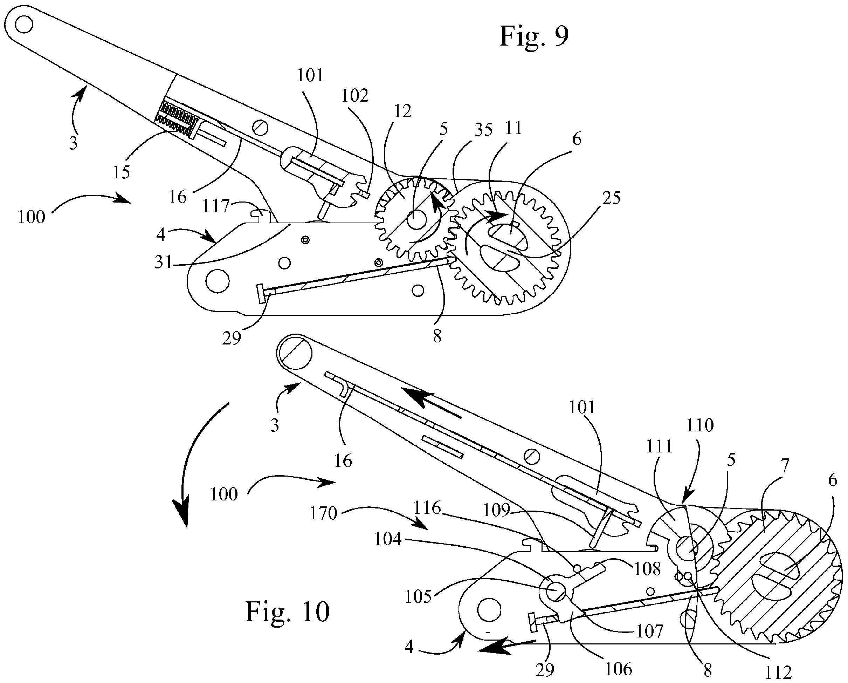

Dans ce mode de réalisation, les moyens de déverrouillage 170 comportent un doigt de déverrouillage 104 (figure 10) monté pivotant dans l'embase 4 autour d'un axe 105 fixe entre une position verrouillée (figures 8 et 10) dans laquelle il bloque le cliquet 8 en position active contraignant la rotation de l'axe d'enroulement 6 dans le sens horaire pour enrouler la sangle, et une position déverrouillée (non représentée) dans laquelle il déplace le cliquet 8 en position passive libérant la rotation de l'axe d'enroulement 6 pour détendre et dérouler la sangle. Ce doigt de déverrouillage 104 comporte un talon 106 logé dans un évidement 107 du cliquet 8 et un nez 108 séparé angulairement du talon 106 pour former un levier démultiplicateur de force et agencé pour recevoir une patte d'appui 109 solidaire de la poignée de déverrouillage 16. Pour obtenir le déverrouillage du cliquet 8 et libérer l'axe d'enroulement 6, l'opérateur doit effectuer deux actions volontaires conformément aux normes en vigueur. Il doit d'abord saisir le levier 3 en tirant à fond sur la poignée de déverrouillage 16 pour positionner la patte d'appui 109 au-dessus du nez 108. Il doit ensuite abaisser le levier 3 en direction de sa position fermée pour que la patte d'appui 109 entre en contact avec le nez 108 et bascule le doigt de déverrouillage 104, ayant comme effet de déplacer le cliquet 8 en arrière à l'encontre de son organe de rappel 9 (non représenté sur ces figures). Dans cette position déverrouillée maintenue par l'opérateur, la sangle peut être libérée, déroulée et du dispositif de mise sous tension 100. Si l'opérateur relâche le levier 3 et la traction sur la poignée de déverrouillage 16, la patte d'appui 109 quitte le nez 108, libérant le doigt de verrouillage 104, autorisant ainsi le retour du cliquet 8 en position active, couplée avec la roue à rochet 7 de l'axe d'enroulement 6 sous l'effet de son organe de rappel 9. L'embase 4 comporte en outre une butée transversale 116 limitant le débattement angulaire du doigt de verrouillage 104.

Le dispositif de mise sous tension 100 comporte en outre des moyens de sécurité 110 agencés pour empêcher le déverrouillage accidentel de la sangle dans l'hypothèse où le levier 3 quitterait accidentellement sa position fermée lorsque le dispositif de mise sous tension est en position route. Ces moyens de sécurité 110 comportent une came 111 formée d'un secteur circulaire mobile autour de l'axe de pivotement 5, disposée à l'intérieur de l'embase 4 et à proximité de chaque roue dentée 12. Elle comporte un axe décentré 112 parallèle à l'axe de pivotement 5 qui est sollicité par un organe de rappel 113 fixé à un point d'accrochage 114 de l'embase 4. Lorsque le levier 3 est en position ouverte (figure 8) et que la poignée de déverrouillage 16 est relâchée pour mettre en tension la sangle, la base 115 de la poignée de déverrouillage 16 glisse à l'arrière du secteur circulaire de la came 111, lorsque les organes de verrouillage 101 passent en position active et sont couplés aux roues dentées 12. Ainsi lorsque le levier 3 est pivoté de sa position ouverte à sa position fermée pour tendre la sangle, il entraîne simultanément la came 111 en position basse qui pivote autour de l'axe de pivotement 5 et met sous tension son organe de rappel 113. Dès que l'opérateur recommence la manoeuvre pour continuer de tendre la sangle, il saisit le levier 3 par la poignée 28 en tirant la poignée de déverrouillage 16 pour découpler les organes de verrouillage 101 des roues dentées 12 et pivoter le levier 3 en position ouverte, la came 111 est libérée et revient automatiquement en position haute sous l'action de son organe de rappel 113, permettant à la base 115 de la poignée de déverrouillage 16 de glisser sur son secteur circulaire évitant ainsi que les organes de verrouillage 101 n'interfèrent avec les roues dentées 12. Lorsque la sangle est tendue, le levier 3 est rabattu en position fermée et la charge maintenue par la sangle est sécurisée. Le dispositif de mise sous tension 100 est en position route. Si le levier 3 devait accidentellement quitter sa position fermée verrouillé, cette came 111 basculerait automatiquement en position haute, permettant à la base 115 de la poignée de déverrouillage 16 de glisser sur son secteur circulaire, pour que le levier 3 puisse se refermer automatiquement sous l'effet de son propre poids et que les organes de verrouillage 101 se couplent à nouveau aux roues dentées 12 en position active, pour verrouiller l'axe d'enroulement 6 par l'intermédiaire de l'axe de pivotement 5 et éviter tout desserrage de la sangle.

A cet effet, la position route du dispositif de mise sous tension 100 est également verrouillée par deux crans d'arrêt 117 prévus sur l'embase 4, saillants par rapport aux butées 31, et coopérant avec deux encoches 118 prévues sur la poignée de déverrouillage 16. Ainsi, lorsque l'opérateur a terminé de tendre la sangle, il tire sur la poignée de déverrouillage 16 pour abaisser le levier 3 jusqu'aux butées 31 de l'embase 4 permettant d'introduire les encoches 118 sur les crans d'arrêt 117. Lorsqu'il relâche la poignée de déverrouillage 16, elle se déplace sous l'action de ses organes de rappel 15 et se verrouille à l'arrière des crans d'arrêt 117. Le levier 3 reste en position fermée verrouillée et le dispositif de mise sous tension 100 est dans une position route entièrement sécurisée.

### Possibilités d'application industrielle :

Il ressort clairement de cette description que l'invention permet d'atteindre les buts fixés, à savoir un dispositif de mise sous tension d'une sangle facile d'usage, compact, léger, sécurisé et ergonomique.

La présente invention trouve une application industrielle dans le domaine du transport de marchandises nécessitant l'arrimage des charges.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif de mise sous tension (1, 100) d'une sangle (2) pour fixer une charge, comportant un levier (3) lié en rotation à une embase (4) autour d'un axe de pivotement (5), et un axe d'enroulement (6) fendu pour permettre l'enroulement de la dite sangle (2), ledit axe d'enroulement (6) étant solidaire d'au moins une première roue à rochet (7) coopérant avec au moins un premier cliquet (8) formant des premiers moyens de contrôle de la rotation dudit axe d'enroulement, ledit au moins premier cliquet (8) étant monté mobile en translation dans ladite embase (4) entre une position active, dans laquelle il est couplé à ladite première roue à rochet (7) et est sollicité par un organe de rappel (9) vers l'axe d'enroulement (6) pour contraindre la rotation de l'axe d'enroulement (6) dans un seul sens, enrouler et tendre ladite sangle, et une position passive, dans laquelle il est découplé de ladite première roue à rochet (7) pour libérer en rotation l'axe d'enroulement (6), détendre et dérouler ladite sangle, ledit dispositif étant **caractérisé en ce que** ledit axe de pivotement (5) et ledit axe d'enroulement (6) sont distincts, parallèles et couplés en rotation par un mécanisme de transmission du mouvement (10) agencé pour démultiplier la vitesse de rotation de l'axe d'enroulement (6) par rapport à la vitesse de rotation de l'axe de pivotement (5) et pour inverser leur sens de rotation, **en ce que** ledit dispositif comporte des seconds moyens de contrôle de la rotation dudit axe de pivotement (5), et **en ce que** ledit dispositif comporte en outre des moyens de déverrouillage (16, 17, 170) agencés pour découpler lesdits premiers et seconds moyens de contrôle afin de libérer en rotation lesdits axes de pivotement (5) et d'enroulement (6) lorsque ledit levier (3) est placé dans une position de déverrouillage autorisant le déroulement de ladite sangle.

2. Dispositif de mise sous tension selon la revendication 1, **caractérisé en ce que** ledit mécanisme de transmission du mouvement (10) comporte au moins une première roue dentée (12) dite menante solidaire dudit axe de pivotement (5) et au moins une seconde roue dentée (11) dite menée solidaire audit axe d'enroulement (6).

3. Dispositif de mise sous tension selon la revendication 2, **caractérisé en ce que** la dite première roue menante (12) comporte un nombre de dents inférieur au nombre de dents de ladite seconde roue menée (11) pour définir un rapport de transmission inférieur à 1, compris entre 1 et 0,25 et de préférence sensiblement égal à 0,5.

4. Dispositif de mise sous tension selon la revendication 1, **caractérisé en ce qu'**il comporte au moins une butée (31, 35) ménagée sur ladite embase (4) pour limiter le débattement angulaire dudit levier (3) autour dudit axe de pivotement (5) et définir au moins l'une des positions fermée ou ouverte dudit levier (3).

5. Dispositif de mise sous tension (1) selon l'une quelconque des revendications précédentes, **caractérisé en ce que** lesdits seconds moyens de contrôle de la rotation dudit axe de pivotement (5) comportent au moins une seconde roue à rochet (13) qui coopère avec au moins un second cliquet (14) mobile en translation dans ledit levier (3) entre une position active, dans laquelle il est couplé à ladite seconde roue à rochet (13) et sollicité par un organe de rappel (15) vers l'axe de pivotement (5) pour contraindre la rotation de l'axe de pivotement (5) dans un seul sens, et une position passive, dans laquelle il est découplé de la dite seconde roue à rochet (13) par une poignée de déverrouillage (16) située sur ledit levier (3) pour libérer en rotation ledit axe de pivotement (5).

6. Dispositif de mise sous tension selon la revendication 5, **caractérisé en ce que** les moyens de déverrouillage (17) comportent une première pièce (18) liée audit premier cliquet (8) agencée pour coopérer avec une seconde pièce (19) liée audit second cliquet (14) lorsque ladite poignée de déverrouillage (16) est actionnée en position déverrouillée.

7. Dispositif de mise sous tension selon la revendication 6, caractérisé en ce lesdites première (18) et seconde (19) pièces comportant respectivement une première branche (20) et une seconde branche (21) saillantes agencées pour entrer en contact lorsque ladite poignée de déverrouillage (16) est déplacée en translation sensiblement parallèle à ladite embase (4).

8. Dispositif de mise sous tension selon la revendication 6, **caractérisé en ce que** ladite première pièce (18) comporte une partie femelle (32) et **en ce que** ladite seconde pièce (19) comporte une partie mâle (21) agencée pour s'introduire dans ladite partie femelle (32) lorsque la poignée de déverrouillage (16) est déplacée en translation sensiblement perpendiculaire à ladite embase (4).

9. Dispositif de mise sous tension (100) selon l'une quelconque des revendications 2 à 4, **caractérisé en ce que** lesdits seconds moyens de contrôle de la rotation dudit axe de pivotement (5) comportent au moins un organe de verrouillage (101) mobile en translation dans ledit levier (3) entre une position active, dans laquelle il est couplé à ladite au moins première roue dentée (12) solidaire dudit axe de pivotement (5) et sollicité par un organe de rappel (15) vers l'axe de pivotement (5) pour entraîner la rotation de l'axe de pivotement (5), et une position passive, dans laquelle il est découplé de ladite au moins première roue dentée (12) par une poignée de déverrouillage (16) située sur ledit levier (3) pour libérer en rotation ledit axe de pivotement (5).

10. Dispositif de mise sous tension selon la revendication 9, **caractérisé en ce que** ledit organe de verrouillage (101) est aligné sur ladite roue dentée (12) et disposé perpendiculairement à l'axe de rotation de ladite roue dentée (12).

11. Dispositif de mise sous tension selon la revendication 9, **caractérisé en ce qu'**il comporte au moins une came (111) mobile autour dudit axe de pivotement (5) et sollicitée par un organe de rappel (113) dans une position haute dans laquelle elle contraint le positionnement dudit organe de verrouillage (101) en position active lorsque ladite poignée de déverrouillage (16) est relâchée.

12. Dispositif de mise sous tension selon la revendication 9, **caractérisé en ce que** lesdits moyens de déverrouillage (170) comportent un doigt de verrouillage (104) monté pivotant dans ladite embase (4) autour d'un axe (105) entre une position verrouillée dans laquelle il bloque ledit cliquet (8) en position active, et une position déverrouillée dans laquelle il déplace ledit cliquet (8) en position passive, et une patte d'appui (109) liée audit organe de verrouillage (101) et agencée pour basculer ledit doigt de verrouillage (104) en position déverrouillée, lorsque ladite poignée de déverrouillage (16) est actionnée en position déverrouillée.

13. Dispositif de mise sous tension selon la revendication 12, **caractérisé en ce que** ledit doigt de verrouillage (104) comporte un talon (106) logé dans un évidement (107) du cliquet (8) et un nez (108) séparé angulairement dudit talon (106) pour former un levier démultiplicateur de force et agencé pour recevoir ladite patte d'appui (109) solidaire de la poignée de déverrouillage (16).

14. Dispositif de mise sous tension selon la revendication 9, **caractérisé en ce qu'**il comporte des moyens de verrouillage du levier (3) dans une position fermée.

15. Dispositif de mise sous tension selon la revendication 14, **caractérisé en ce que** lesdits moyens de verrouillage dudit levier (3) comportent au moins un cran d'arrêt (117) prévu sur ladite embase (4) et agencé pour se verrouiller dans au moins une encoche (118) prévue sur la poignée de déverrouillage (16).

## Patentansprüche

1. Vorrichtung (1, 100) zum Spannen eines Bandes (2) zum Fixieren einer Last, umfassend einen Hebel (3), der drehbar mit einer Basis (4) um eine Drehachse (5) verbunden ist, und eine geschlitzte Wickelachse (6), um das Aufwickeln des Bandes (2) zu ermöglichen, wobei die Wickelachse (6) befestigt ist an mindestens einem ersten Ratschenrad (7), das mit mindestens einer ersten Ratsche (8) zusammenwirkt wobei sie zusammen erste Steuermittel der Drehung der Wickelachse bilden, wobei die mindestens eine erste Ratsche (8) so montiert ist, dass sie in der Basis (4) zwischen einer aktiven Position, in der sie mit dem ersten Ratschenrad (7) gekoppelt ist und von einem Rückstellelement (9) in Richtung der Wickelachse (6) vorgespannt wird, um die Drehung der Wickelachse (6) in eine Richtung zu erzwingen, um das Band aufzuwickeln und zu spannen, und einer passiven Position, in der sie von dem ersten Ratschenrad (7) entkoppelt ist, um die Wickelachse (6) drehbar freizugeben und das Band zu entspannen und abzuwickeln, bewegbar ist, wobei die Vorrichtung **dadurch gekennzeichnet ist, dass** die Drehachse (5) und die Wickelachse (6) unterschiedlich, parallel und drehbar durch einen Bewegungsübertragungsmechanismus (10) gekoppelt sind, der so angeordnet ist, dass er die Drehzahl der Wickelachse (6) in Bezug auf die Drehzahl der Drehachse (5) multipliziert und ihre Drehrichtung umkehrt, dass die Vorrichtung zweite Steuermittel der Drehung der Drehachse (5) umfasst, und dass die Vorrichtung ferner Entriegelungsmittel (16, 17, 170) umfasst, die angeordnet sind, um die ersten und zweiten Steuermittel zu entkoppeln, um die Drehachsen (5) und Wickelachsen (6) drehbar freizugeben, wenn der Hebel (3) in eine Entriegelungsposition gebracht wird, die es ermöglicht, dass das Band abgewickelt wird.

2. Spannvorrichtung nach Anspruch 1, **dadurch gekennzeichnet, dass** der Bewegungsübertragungsmechanismus (10) mindestens ein erstes führendes Zahnrad (12) umfasst, befestigt an der Drehachse (5), und mindestens ein zweites geführtes Zahnrad (11), befestigt an der Wickelachse (6).

3. Spannvorrichtung nach Anspruch 2, **dadurch gekennzeichnet, dass** das erste führende Zahnrad (12) eine Anzahl von Zähnen aufweist, die kleiner als die Anzahl der Zähne des zweiten geführten Zahnrades (11) ist, um ein Übersetzungsverhältnis kleiner als 1, zwischen 1 und 0,25 und vorzugsweise im Wesentlichen gleich 0,5 zu definieren.

4. Spannvorrichtung nach Anspruch 1, **dadurch gekennzeichnet, dass** sie mindestens einen Anschlag (31, 35) umfasst, der auf der Basis (4) vorgesehen ist, um die Winkelverschiebung des Hebels (3) um die Drehachse (5) zu begrenzen und mindestens eine der geschlossenen oder offenen Positionen des Hebels (3) zu definieren.

5. Spannvorrichtung (1) nach einem der vorhergehenden Ansprüche, **dadurch gekennzeichnet, dass** die zweiten Steuermittel der Drehung der Drehachse (5) mindestens ein zweites Ratschenrad (13) umfassen, das mit mindestens einer zweiten Ratsche (14) zusammenwirkt, die in dem Hebel (3) zwischen einer aktiven Position translatorisch beweglich ist zwischen einer aktiven Position, wo es mit dem zweiten Ratschenrad (13) gekoppelt und durch ein Rückstellelement (15) in Richtung der Drehachse (5) vorgespannt ist, um die Drehung der Drehachse (5) in nur eine Richtung zu begrenzen, und einer passiven Position, in der es von dem zweiten Ratschenrad (13) durch einen Entriegelungsgriff (16), der sich an dem Hebel (3) befindet, entkoppelt ist, um die Drehachse (5) drehbar freizugeben.

6. Spannvorrichtung nach Anspruch 5, **dadurch gekennzeichnet, dass** die Entriegelungseinrichtung (17) einen ersten Teil (18) umfasst, der mit der ersten Ratsche (8) verbunden ist und mit einem zweiten Teil (19) zusammenwirkt, der mit der zweiten Ratsche (14) verbunden ist, wenn der Entriegelungsgriff (16) in die entriegelte Position betätigt wird.

7. Spannvorrichtung nach Anspruch 6, **dadurch gekennzeichnet, dass** die ersten (18) und zweiten (19) Teile jeweils einen ersten (20) und einen zweiten (21) vorstehenden Schenkel aufweisen, die so angeordnet sind, dass sie in Kontakt kommen, wenn der Entriegelungsgriff (16) translatorisch im Wesentlichen parallel zu der Grundplatte (4) bewegt wird.

8. Spannvorrichtung nach Anspruch 6, **dadurch gekennzeichnet, dass** der erste Teil (18) einen Buchsenteil (32) und der zweite Teil (19) einen Stiftteil (21) aufweist, der so angeordnet ist, dass er in den Buchsenteil (32) eintritt, wenn der Entriegelungsgriff (16) in Translation im Wesentlichen senkrecht zu der Basis (4) bewegt wird.

9. Spannvorrichtung (100) nach einem der Ansprüche 2 bis 4, **dadurch gekennzeichnet, dass** die zweiten Steuermittel der Drehung der Drehachse (5) mindestens ein Verriegelungselement (101) umfassen, das in dem Hebel (3) translatorisch beweglich ist zwischen einer aktiven Position, in der es gekoppelt ist mit dem mindestens einen ersten Zahnrad (12), das mit der Drehachse (5) fest verbunden ist und von einem Rückstellelement (15) in Richtung der Drehachse (5) vorgespannt wird, um die Drehung der Drehachse (5) zu bewirken, und einer passiven Position, in der es von dem mindestens einen ersten Zahnrad (12) durch einen Entriegelungsgriff (16), der sich auf dem Hebel (3) befindet, entkoppelt ist, um die Drehachse (5) drehbar freizugeben.

10. Spannvorrichtung nach Anspruch 9, **dadurch gekennzeichnet, dass** das Verriegelungselement (101) mit dem Zahnrad (12) ausgereiht und senkrecht zur Drehachse des Zahnrades (12) angeordnet ist.

11. Spannvorrichtung nach Anspruch 9, **dadurch gekennzeichnet, dass** sie mindestens einen Nocken (111) umfasst, der um die Drehachse (5) beweglich ist und von einem Rückstellelement (113) in einer oberen Position vorgespannt wird, in der sie die Positionierung des Verriegelungselements (101) in die aktive Position einschränkt, wenn der Entriegelungsgriff (16) gelöst wird.

12. Spannvorrichtung nach Anspruch 9, **dadurch gekennzeichnet, dass** die Entriegelungseinrichtung (170) einen Sperrfinger (104) beinhaltet, der schwenkbar in der Basis (4) um eine Achse (105) zwischen einer verriegelten Position, in der sie die Ratsche (8) in der aktiven Position verriegelt, , und eine entriegelte Position, in der sie die Ratsche (8) in eine passive Position bewegt, montiert ist, und eine Haltelasche (109), die mit dem Verriegelungselement (101) verbunden ist und angeordnet ist, um den Verriegelungsfinger (104) in die entriegelte Position zu schwenken, wenn der Entriegelungsgriff (16) in die entriegelte Position betätigt wird.

13. Spannvorrichtung nach Anspruch 12, **dadurch gekennzeichnet, dass** der Verriegelungsfinger (104) einen Absatz (106) aufweist, der in einer Aussparung (107) in der Ratsche (8) untergebracht ist, und eine Nase (108), die winklig von dem Absatz (106) getrennt ist, um einen Kraftminderungshebel zu bilden, und angeordnet ist, um die Haltelasche (109), die an dem Entriegelungsgriff (16) befestigt ist, aufzunehmen

14. Spannvorrichtung nach Anspruch 9, **dadurch gekennzeichnet, dass** sie Mittel zum Verriegeln des Hebels (3) in einer geschlossenen Position beinhaltet.

15. Spannvorrichtung nach Anspruch 14, **dadurch gekennzeichnet, dass** die Verriegelungsmittel des Hebels (3) mindestens eine Stoppkerbe (117) aufweisen, die auf der Basis (4) vorgesehen ist und angeordnet ist, um in mindestens eine Kerbe (118) einzurasten, die auf dem Entriegelungsgriff (16) vorgesehen ist.

## Claims

1. Tensioning device (1, 100) for tensioning a strap (2) to fix a load, comprising a lever (3) rotatably connected to a base (4) around a pivot axis (5), and a slotted winding axis (6) to allow the winding of said strap (2), said winding axis (6) being integral with at least one first ratchet wheel (7) cooperating with at least one first ratchet (8) forming first control means for controlling the rotation of said winding axis, said at least one first ratchet (8) being mounted so as to be movable in translation in said base (4) between an active position, in which it is coupled to said first ratchet wheel (7) and solicited by a return member (9) towards the winding axis (6) to force the rotation of the winding axis (6) in only one direction, to wind and tension said strap, and a passive position, in which it is uncoupled from said first ratchet wheel (7) to release the rotation of the winding axis (6), relax and unwind said strap, said device being **characterized in that** said pivot axis (5) and said winding axis (6) are distinct, parallel and rotatably coupled by a motion transmission mechanism (10) arranged to multiply the rotational speed of the winding axis (6) with respect to the rotational speed of the pivot axis (5) and to reverse their rotational direction, **in that** said device comprises second control means for controlling the rotation of said pivot axis (5), and **in that** said device further comprises unlocking means (16, 17, 170) arranged to uncouple said first and second control means in order to release the rotation of said pivot axes (5) and winding axes (6) when said lever (3) is placed in an unlocking position allowing said strap to be unwound.

2. Tensioning device according to claim 1, **characterized in that** said motion transmission mechanism (10) comprises at least one first gearwheel (12) so-called driving wheel integral with said pivot axis (5) and at least one second gearwheel (11) so-called driven integral with said winding axis (6).

3. Tensioning device according to claim 2, **characterized in that** said first driving wheel (12) has a number of teeth smaller than the number of teeth of said second driven wheel (11) to define a transmission ratio smaller than 1, between 1 and 0.25 and preferably substantially equal to 0.5.

4. Tensioning device according to claim 1, **characterized in that** it comprises at least one stop (31, 35) provided on said base (4) to limit the angular displacement of said lever (3) around said pivot axis (5) and define at least one of the closed or open positions of said lever (3).

5. Tensioning device (1) according to one of the previous claims, **characterized in that** said second control means for controlling the rotation of said pivot axis (5) comprise at least one second ratchet wheel (13) which cooperates with at least one second ratchet (14) movable in translation in said lever (3) between an active position, in which it is coupled to said second ratchet wheel (13) and solicited by a return member (15) towards the pivot axis (5) to force the rotation of the pivot axis (5) in only one direction, and a passive position, in which it is uncoupled from said second ratchet wheel (13) by an unlocking handle (16) located on said lever (3) to release the rotation of said pivot axis (5).

6. Tensioning device according to claim 5, **characterized in that** the unlocking means (17) comprise a first part (18) connected to said first ratchet (8) arranged to cooperate with a second part (19) connected to said second ratchet (14) when said unlocking handle (16) is operated in the unlocked position.

7. Tensioning device according to claim 6, **characterized in that** said first (18) and second (19) parts comprise respectively a first protruding branch (20) and a second protruding branch (21) arranged to be in contact when said unlocking handle (16) is moved in translation substantially parallel to said base (4).

8. Tensioning device according to claim 6, **characterized in that** said first part (18) has a female part (32) and said second part (19) has a male part (21) arranged to enter said female part (32) when the unlocking handle (16) is moved in translation substantially perpendicular to said base (4).

9. Tensioning device (100) according to one of the claims 2 to 4, **characterized in that** said second control means for controlling the rotation of said pivot axis (5) comprise at least one locking member (101) movable in translation in said lever (3) between an active position, in which it is coupled to said at least one first gearwheel (12) integral with said pivot axis (5) and solicited by a return member (15) towards the pivot axis (5) to cause the rotation of the pivot axis (5), and a passive position, in which it is uncoupled from said at least one first gearwheel (12) by an unlocking handle (16) located on said lever (3) to release the rotation of said pivot axis (5).

10. Tensioning device according to claim 9, **characterized in that** said locking member (101) is aligned with said gearwheel (12) and arranged perpendicular to the axis of rotation of said gearwheel (12).

11. Tensioning device according to claim 9, **characterized in that** it comprises at least one cam (111) movable around said pivot axis (5) and solicited by a return member (113) in an upper position in which it forces the positioning of said locking member (101) in active position when said unlocking handle (16) is released.

12. Tensioning device according to claim 9, **characterized in that** said unlocking means (170) comprise a locking finger (104) pivotally mounted in said base (4) around an axis (105) between a locked position in which it locks said ratchet (8) in active position, and an unlocked position in which it moves said ratchet (8) into a passive position, and a support bracket (109) connected to said locking member (101) and arranged to switch said locking finger (104) into the unlocked position when said unlocking handle (16) is operated in the unlocked position.

13. Tensioning device according to claim 12, **characterized in that** said locking finger (104) comprises a heel (106) housed in a recess (107) in the ratchet (8) and a nose (108) angularly separated from said heel (106) to form a force multiplier lever and arranged to receive said support bracket (109) integral with the unlocking handle (16).

14. Tensioning device according to claim 9, **characterized in that** it comprises locking means for locking the lever (3) in a closed position.

15. Tensioning device according to claim 14, **characterized in that** said locking means of said lever (3) comprise at least one locking notch (117) provided on said base (4) and arranged to be locked into at least one slot (118) provided on the unlocking handle (16).
